# EUROPÄISCHE PATENTSCHRIFT

(11) **EP 2 804 902 B1**
(45) Veröffentlichungstag und Bekanntmachung des Hinweises auf die Patenterteilung: **03.02.2016**
(21) Anmeldenummer: 14703371.6
(22) Anmeldetag: 07.02.2014
(51) Int. Cl.: C08K 7/24, C09D 5/00, C09D 5/44

(54) **METALL/KUNSTSTOFF-GLEITLAGERVERBUNDWERKSTOFF UND HIERAUS HERGESTELLTES GLEITLAGERELEMENT**
METAL/PLASTIC SLIDE BEARING COMPOSITE MATERIAL AND SLIDE BEARING ELEMENT PRODUCED THEREFROM
MATÉRIAU COMPOSITE POUR PALIER LISSE EN MÉTAL/PLASTIQUE ET ÉLÉMENT DE PALIER LISSE FABRIQUÉ À PARTIR DE CE MATÉRIAU

(30) Priorität: 08.02.2013 DE 102013202121
(43) Veröffentlichungstag der Anmeldung: 26.11.2014
(73) Patentinhaber: KS Gleitlager GmbH, 68789 St. Leon-Rot (DE)
(72) Erfinder: CIESLIK, Franz, 69117 Heidelberg (DE); REINICKE, Rolf, 76669 Bad Schönborn (DE)
(74) Vertreter: DREISS Patentanwälte PartG mbB
(86) Internationale Anmeldenummer: PCT/EP2014/052492
(87) Internationale Veröffentlichungsnummer: WO 2014/122293

(56) Entgegenhaltungen:
- EP-A1- 2 292 704
- WO-A1-2008/040474

## Beschreibung

Die Erfindung betrifft einen Metall/Kunststoff-Gleitlagerverbundwerkstoff mit einer metallischen Stützschicht, insbesondere aus Stahl, mit einer porösen Trägerschicht, insbesondere einer aus metallischen Partikeln aufgesinterten Trägerschicht, und mit einem die Poren der Trägerschicht ausfüllenden Gleitschichtmaterial auf Polymerbasis mit die tribologischen Eigenschaften verbessernden Füllstoffen, wobei die Polymerbasis PTFE ist.

Vorstehend genannte Gleitlagerverbundwerkstoffe sind in großem Umfang, insbesondere zur Herstellung von Gleitlagerelementen im Automobilbereich bekannt geworden. Derartige Gleitlagerverbundwerkstoffe mit einem Gleitschichtmaterial auf PTFE-Basis zeichnen sich durch einen extrem niedrigen Reibwert aus, wobei zur Erhöhung der Verschleißfestigkeit des Verbundwerkstoffs in großem Umfang Füllstoffe und Füllstoffgemische bekannt geworden sind.

Wenn vorausgehend davon die Rede ist, dass die Polymerbasis des Gleitschichtmaterials PTFE ist, so bedeutet dies nicht, dass die matrixbildende Komponente des Gleitschichtmaterials zu 100 % aus PTFE bestehen muss, sondern es können auch weitere matrixbildende Polymere enthalten sein, sofern wenigstens 75 Gew.-%, insbesondere wenigstens 80 Gew.-%, insbesondere wenigstens 90 Gew.-%, insbesondere wenigstens 95 Gew.-% der Polymerkomponente des Gleitschichtmaterials PTFE ist. Vorzugsweise besteht die matrixbildende Polymerkomponente jedoch zu 100 % aus PTFE.

Wie erwähnt werden zur Erhöhung der Verschleißfestigkeit dem Gleitschichtmaterial Füllstoffe in bekannter und üblicher Weise zugesetzt, wobei hiermit gegenüber der reinen PTFE-Polymerbasis eine Erhöhung des Reibwerts einhergeht, was bis zu einem gewissen Grad hingenommen werden muss, da die Zugabe von die Verschleißfestigkeit erhöhenden Füllstoffen eben typischerweise mit einer Reibwerterhöhung einhergeht. DE 10 2009 043 435 A1 zeigt einen gattungsfremden Gleitlack, bei dem nicht nähere spezifizierte Kohlenstoffnanoröhren als Verschleißschutzstoff neben einer Vielzahl anderer Verschleißschutzstoffe genannt sind. DE 10 2012 205 606 A1 beschreibt Kohlenstofffasern als Verstärkungsfasern in einem PTFE basierten und Festschmierstoffe aufweisenden Gleitschichtmaterial.

Der vorliegenden Erfindung liegt die Aufgabe zugrunde, einen Metall/Kunststoff-Gleitlagerverbundwerkstoff der vorausgehend beschriebenen Art im Hinblick auf den geschilderten Zielkonflikt der Realisierung eines möglichst geringen Reibwerts und einer hohen Verschleißfestigkeit zu optimieren.

Diese Aufgabe wird bei einem Gleitlagerverbundwerkstoff der genannten Art erfindungsgemäß dadurch gelöst, dass das Gleitschichtmaterial zu 0,1 - 5 Masse-% mehrwandige Kohlenstoff-Nanoröhrchen mit einem Röhrenaußendurchmesser von ≤ 80 nm und einer Röhrenlänge von ≤ 20µm umfasst.

Es wurde in überraschender Weise festgestellt, dass die Zugabe von Kohlenstoff-Nanoröhrchen der genannten Art nicht nur die Verschleißfestigkeit und sonstige mechanische Kennwerte des Gleitlagerverbundwerkstoffs erhöht bzw. positiv beeinflusst, sondern zugleich den Reibwert herabsetzt. Dies war in höchstem Maße überraschend, da auf dem hier in Rede stehenden Gebiet davon ausgegangen wurde, dass PTFE-basierte Gleitschichtmaterialien hinsichtlich des Reibwerts nicht weiter optimierbar sind. Es wird diesseits vermutet, dass mehrwandige Kohlenstoff-Nanoröhrchen eine gewisse Verschieblichkeit der Schichten innerhalb der Wandung zulassen - wie teleskopierende ineinandergeschobene Zylinder - was sich auf die tribologischen Eigenschaften des entstehenden Verbundwerkstoffs positiv auswirkt. Des Weiteren wird vermutet, dass sich die mehrwandigen Kohlenstoff-Nanoröhrchen aufgrund ihres viel geringeren Volumens gegenüber typischen Kohlenstofffasern mit Durchmessern von 3-5 µm und Längen von 100-1000 µm viel homogener im Gleitschichtmaterial verteilen. Dies bedeutet, dass gewissermaßen in jedem noch so kleinen Volumen des Gleitschichtmaterials stets Kohlenstoff-Nanoröhrchen anzutreffen sind.

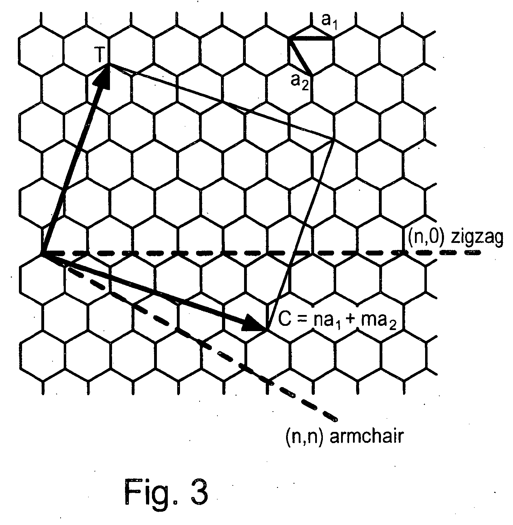

Kohlenstoff-Nanoröhrchen wurden Anfang der 90er Jahre entdeckt; es handelt sich um konzentrische rohr- oder rohrförmige Gebilde aus Graphit bzw. Kohlenstoffatomen. Die Rohrwandungen oder Röhrchen sind dabei gewissermaßen von in Zylinderform aufgerollten Flächengebilden aus ebenen einatomigen hexagonalen wabenartigen Lagen aus Kohlenstoffatomen gebildet. Die mehrwandigen Kohlenstoff-Nanoröhrchen haben dabei zwischen 2 und 20 zylindrische Rohrwandungen oder -schichten solcher Lagen. Innerhalb der Rohrstruktur ist der radiale Abstand der Lagen voneinander ungefähr im Bereich von 0,3 - 0,4 nm und entspricht ungefähr dem 1,5-fachen des Betrags des Einheitsvektors der hexagonalen Struktur. Die Wickelachse oder Zylinderachse der Rohrstruktur steht senkrecht auf der kreisförmigen Umfangslinie. Die kreisförmige Umfangslinie in ebene Form wieder ausgerollt beschreibt als Vektor über Indizes n, m die Orientierung der Rohrwicklung in Bezug auf die hexagonale Wabenstruktur bzw. in Bezug auf deren Einheitsvektoren. Man identifiziert hierbei wie in Fig.3 angedeutet eine Wicklung mit n=m, die als arm chair bezeichnet wird, und eine Wicklung mit n, m=0, die als zig-zag bezeichnet wird, und Wicklungen mit beliebigem n,m, die als chiral bezeichnet werden. Diese Wicklungen arm chair, zig-zag und chiral werden bevorzugt, da sie eine gleichmäßige spannungsarme und damit verzerrungsfreie Röhrenbildung erlauben. Am geeignetsten ist arm chair. Vorzugsweise haben alle Wandungen der mehrwandigen Kohlenstoff-Nanoröhrchen dieselbe durch n und m beschriebene Wicklungsrichtung.

In Weiterbildung der Erfindung erweist es sich als vorteilhaft, wenn der Röhrenaußendurchmesser der Kohlenstoff-Nanoröhrchen ≤ 70 nm, insbesondere ≤ 60 nm, insbesondere ≤ 50 nm ist. Weiter erweist es sich als vorteilhaft, wenn die Röhrenlänge der Kohlenstoff-Nanoröhrchen ≤ 15 µm, insbesondere ≤ 10 µm, insbesondere ≤ 5 µm, insbesondere ≤ 3 µm, insbesondere ≤ 2 µm ist. Des Weiteren erweist es sich als vorteilhaft, wenn das Gleitschichtmaterial zu 0,1 - 4 Masse-%, insbesondere zu 0,5 - 4 Masse-%, insbesondere zu 1 - 4 Masse-%, insbesondere zu 1 - 3,5 Masse-% Kohlenstoff-Nanoröhrchen umfasst.

Es wurde des Weiteren festgestellt, dass eine Orientierung der Kohlenstoff-Nanoröhrchen in Richtung der gleitenden Beanspruchung weitere Vorteile hinsichtlich einer Reduzierung bzw. Niedrighaltung des Reibwerts mit sich bringt.

Weiter kann es sich als vorteilhaft erweisen, wenn das Gleitschichtmaterial zu 1 - 40 Masse-%, insbesondere zu 1 - 30 Masse -%, insbesondere 1 - 25 Masse -%, insbesondere 5 - 25 Masse -%, insbesondere 10 - 25 Masse -% weitere Füllstoffe (neben Kohlenstoff-Nanoröhrchen) umfasst.

Als weitere Füllstoffe kommen in Frage: Verstärkungsstoffe, wie insbesondere C-Fasern, Glasfasern, Polyamidfasern (Aramid); Festschmierstoffe, wie ZnS, BaSO₄, Graphit, Ruß, hexagonales Bornitrid; Metallsulfide, wie MoS₂, SnS₂,WS₂; Kunststoffpartikel, wie insbesondere Aramid (PPTA)-, PPSO₂-, PI- und PAI-Partikel, Polyarcylatpartikel (PAR), PBA, PBI; Metalloxide, wie insbesondere Fe₂O₃, Al₂O₃, SiO₂, TiO₂, CuO, MgO, ZnO; Hartstoffe (keramische Partikel), wie insbesondere SiC, Si₃N₄, BC, kubisches Bornitrid; Fluoride, wie insbesondere CaF₂, NaF, AlF₃; Schichtsilikate, wie insbesondere Kaolin, Glimmer, Wollastonit, Talk, Kieselsäure; metallische Feinpulver, wie insbesondere Bronze und Wismut; und Pigmente, wie insbesondere Mischphasenoxidpigmente, nämlich Co-Al, Cr-Sb-Ti, Co-Ti, Fe-Al oder Co-Cr.

Als besonders zweckmäßig hat es sich erwiesen, wenn die weiteren Füllstoffe Verstärkungsstoffe, insbesondere Kohlenstoff-Fasern, umfassen.

Des Weiteren hat es sich als vorteilhaft erwiesen, wenn die weiteren Füllstoffe Festschmierstoffe, insbesondere Graphit oder hexagonales Bornitrid, umfassen.

Des Weiteren hat es sich als vorteilhaft erwiesen, wenn die weiteren Füllstoffe Metallsulfide, insbesondere MoS₂ oder ZnS, umfassen.

Des Weiteren wird Schutz beansprucht für ein Gleitlagerelement, hergestellt aus einem Gleitlagerverbundwerkstoff, insbesondere in einem Roll-Biege-Umformprozess oder in einem Tiefziehprozess. Bei derartigen Gleitelementen handelt es sich also typischerweise um gerollte zylindrische Buchsen oder um halbschalenförmige Gleitlagerelemente. Auch Bundbuchsen oder Topfbuchsen oder ebene oder sphärische Gleitlagerelemente sind denkbar.

Weitere Einzelheiten, Merkmale und Vorteile der Erfindung ergeben sich aus den beigefügten Patentansprüchen und der nachfolgenden Beschreibung und zeichnerischen Darstellung bevorzugter Ausführungsformen der Erfindung.

In der Zeichnung zeigt:
Figur 1 eine schematische Schnittansicht eines erfindungsgemäßen Metall/Kunststoff-Gleitlagerverbundwerkstoffs;
Figur 2 Messergebnisse des Reibwerts von aus erfindungsgemäßen Gleitlagerverbundwerkstoffen gefertigten Gleitlagerelementen;
Figur 3 verdeutlicht die Wicklungsrichtung zur Bildung von Kohlenstoffnanoröhrchen ausgehend von einatomigen hexagonalen Kohlenstofflagen.

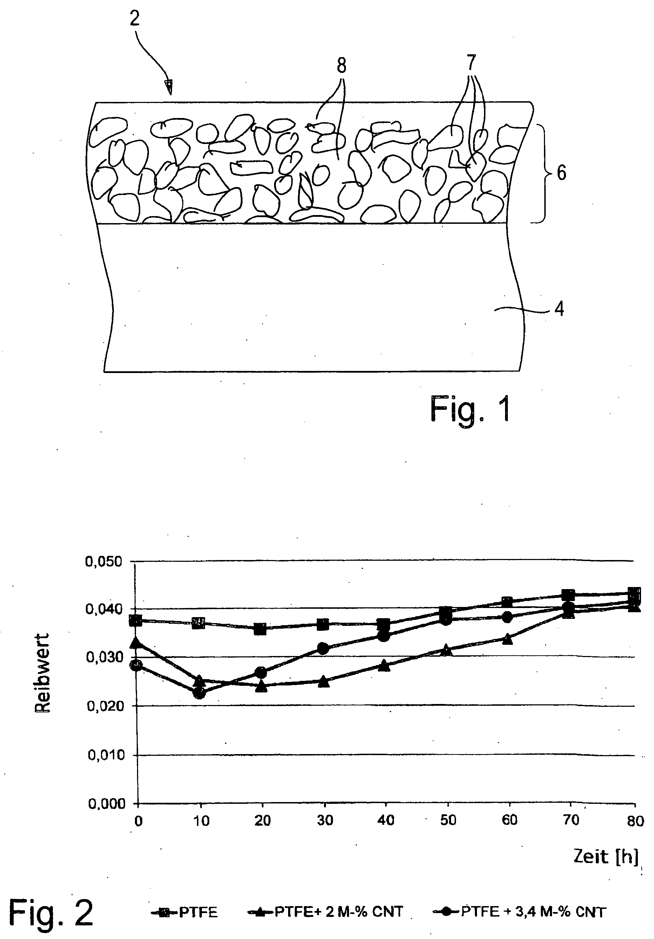

Figur 1 zeigt eine schematische Schnittansicht eines erfindungsgemäßen Gleitlagerverbundwerkstoffs 2 mit einer metallischen Stützschicht 4, typischerweise aus Stahl, und mit einer porösen Trägerschicht 6. Die poröse Trägerschicht 6 ist gebildet von einer Sinterschicht aus metallischen Partikeln 7 auf Bronzebasis. Die Partikel der Trägerschicht 6 bilden dabei zusammenhängende makroskopische Hohlräume (die aber nicht maßstabsgetreu dargestellt sind), in welche ein Gleitschichtmaterial 8 auf Polymerbasis einimprägniert ist. Das Gleitschichtmaterial 8 füllt dabei die Poren der Trägerschicht im Wesentlichen vollständig aus. Die matrixbildende Polymerkomponente des Gleitschichtmaterials 8 beruht auf PTFE-Basis im eingangs definierten Sinn. Die Polymerkomponente besteht vorteilhafterweise aus PTFE. Das Gleitschichtmaterial 8 umfasst des Weiteren Füllstoffe, die in der matrixbildenden Polymerkomponente aufgenommen sind. In erfinderischer Weise umfasst das Gleitschichtmaterial 8 zwischen 0,1 und 5 Masse-% Kohlenstoff-Nanoröhrchen der eingangs beschriebenen Art, die aber in der Zeichnung nicht dargestellt sind. Weitere Füllstoffe neben Kohlenstoff-Nanoröhrchen können sich als vorteilhaft erweisen und sind ebenfalls nicht dargestellt. Es kommen hier insbesondere die eingangs genannten Füllstoffe in Frage. Verstärkungsstoffe, insbesondere Kohlenstofffasern, Festschmierstoffe, insbesondere Graphit oder hexagonales Bornitrid, und Metallsulfide kommen insbesondere in Frage.

Figur 2 zeigt das Ergebnis von Reibwertmessungen an Gleitlagerelementen, die an Gleitlagerverbundwerkstoffen der nachfolgenden Zusammensetzung gemessen wurden. Die Gleitlagerverbundwerkstoffe umfassen eine metallische Stützschicht aus Stahl, eine poröse Trägerschicht der vorstehend beschriebenen Art und ein die Poren der Trägerschicht ausfüllendes Gleitschichtmaterial auf Polymerbasis. Die untersuchten Gleitlagerelemente unterscheiden sich hinsichtlich der Zusammensetzung des Gleitschichtmaterials. Bei dem Gleitlagerelement 1) besteht das Gleitschichtmaterial aus 100 Masse-% PTFE ohne Füllstoffe. Bei 2) besteht das Gleitschichtmaterial aus 98 Masse-% PTFE und 2 Masse-% Kohlenstoff-Nanoröhrchen. Bei 3) aus 96,6 Masse-% PTFE und 3,4 Masse-% Kohlenstoff-Nanoröhrchen. Man erkennt eine Reduzierung des Reibwerts durch Zugabe von Kohlenstoff-Nanoröhrchen, was in höchstem Maße überraschend war.

Zur Herstellung des erfindungsgemäßen Gleitlagerverbundwerkstoffs wird in an sich bekannter Weise eine PTFE-Dispersion gebildet, welcher Kohlenstoff6Nanoröhrchen im beanspruchten Umfang beigegeben werden. Diese Dispersion wird dann koaguliert und in die Poren der porösen Trägerschicht, vorzugsweise in einem Walzvorgang, einimprägniert und unter Temperatureinwirkung weiter behandelt.

## Patentansprüche

1. Metall/Kunststoff-Gleitlagerverbundwerkstoff (2) mit einer metallischen Stützschicht (4), insbesondere aus Stahl, mit einer porösen Trägerschicht (6), insbesondere einer aus metallischen Partikeln (7) aufgesinterten Trägerschicht (6), und mit einem die Poren der Trägerschicht (6) ausfüllenden Gleitschichtmaterial (8) auf Polymerbasis mit die tribologischen Eigenschaften verbessernden Füllstoffen, wobei die Polymerbasis PTFE ist, **dadurch gekennzeichnet, dass** das Gleitschichtmaterial (8) zu 0,1 - 5 Masse-% mehrwandige Kohlenstoff-Nanoröhrchen mit einem Röhrenaußendurchmesser von ≤ 80 nm und einer Röhrenlänge von ≤ 20µm umfasst.

2. Gleitlagerverbundwerkstoff nach Anspruch 1, **dadurch gekennzeichnet, dass** der Röhrenaußendurchmesser der Kohlenstoff-Nanoröhrchen ≤ 70 nm, insbesondere ≤ 60 nm, insbesondere ≤ 50 nm ist.

3. Gleitlagerverbundwerkstoff nach Anspruch 1 oder 2, **dadurch gekennzeichnet, dass** die Röhrenlänge der Kohlenstoff-Nanoröhrchen ≤ 15 µm, insbesondere ≤ 10 µm, insbesondere ≤ 5 µm, insbesondere ≤ 3 µm, insbesondere ≤ 2 µm ist.

4. Gleitlagerverbundwerkstoff nach einem oder mehreren der vorstehenden Ansprüche, **dadurch gekennzeichnet, dass** das Gleitschichtmaterial (8) zu 0,1 - 4 Masse-%, insbesondere zu 0,5 - 4 Masse-%, insbesondere zu 1 - 4 Masse-%, insbesondere zu 1 - 3,5 Masse-% Kohlenstoff-Nanoröhrchen umfasst.

5. Gleitlagerverbundwerkstoff nach einem oder mehreren der vorstehenden Ansprüche, **dadurch gekennzeichnet, dass** die mehrwandigen Kohlenstoff-Nanoröhrchen 2 bis 20 Wandungen aufweisen.

6. Gleitlagerverbundwerkstoff nach einem oder mehreren der vorstehenden Ansprüche, **dadurch gekennzeichnet, dass** die Kohlenstoff-Nanoröhrchen in arm chair Wicklungsrichtung (n=m), in zig-zag Orientierung (n, m=0) oder chiral (n,m beliebig) gewickelt sind.

7. Gleitlagerverbundwerkstoff nach einem oder mehreren der vorstehende Ansprüche, **dadurch gekennzeichnet, dass** die Wandungen der mehrwandigen Kohlenstoff-Nanoröhrchen dieselbe durch n und m beschriebene Wicklungsrichtung aufweisen.

8. Gleitlagerverbundwerkstoff nach einem oder mehreren der vorstehenden Ansprüche, **dadurch gekennzeichnet, dass** die Kohlenstoff-Nanoröhrchen in Richtung der gleitenden Beanspruchung orientiert sind.

9. Gleitlägerverbundwerkstoff nach einem oder mehreren der vorstehenden Ansprüche, **dadurch gekennzeichnet, dass** das Gleitschichtmaterial (8) zu 1 - 40 Masse-%, insbesondere zu 1 - 30 Masse-%, insbesondere 1 - 25 Masse-%, insbesondere 5 - 25 Masse-%, insbesondere 10 - 25 Masse-% weitere Füllstoffe umfasst.

10. Gleitlagerverbundwerkstoff nach Anspruch 9, dass die weiteren Füllstoffe Verstärkungsstoffe, wie insbesondere C-Fasern, Glasfasern, Polyamidfasern (Aramid); und/oder Festschmierstoffe, wie insbesondere ZnS, BaSO₄, Graphit, Ruß, hexagonales Bornitrid; und/oder Metallsulfide, wie MoS₂, SnS₂,WS₂; und/oder Kunststoffpartikel, wie insbesondere Aramid (PPTA)-, PPSO₂-, PI-und PAI-Partikel, Polyarcylatpartikel (PAR), PBA, PBI; und/oder Metalloxide, wie insbesondere Fe₂O₃, Al₂O₃, SiO₂, TiO₂, CuO, MgO, ZnO; und/oder Hartstoffe (keramische Partikel), wie insbesondere SiC, Si₃N₄, BC, kubisches Bornitrid; und/oder Fluoride, wie insbesondere CaF₂, NaF, AlF₃; und/oder Schichtsilikate, wie insbesondere Kaolin, Glimmer, Wollastonit, Talk, Kieselsäure, und/oder metallische Feinpulver, wie insbesondere Bronze und Wismut; und/oder Pigmente, wie insbesondere Mischphasenoxidpigmente, nämlich Co-Al, Cr-Sb-Ti, Co-Ti, Fe-Al oder Co-Cr, umfassen.

11. Gleitlagerverbundwerkstoff nach einem oder mehreren der vorstehenden Ansprüche, **dadurch gekennzeichnet, dass** die weiteren Füllstoffe Verstärkungsstoffe, insbesondere Kohlenstofffasern, umfassen.

12. Gleitlagerverbundwerkstoff nach einem oder mehreren der vorstehenden Ansprüche, **dadurch gekennzeichnet, dass** die weiteren Füllstoffe Festschmierstoffe, insbesondere Graphit oder hexagonales Bornitrid, umfassen.

13. Gleitlagerverbundwerkstoff nach einem oder mehreren der vorstehenden Ansprüche, **dadurch gekennzeichnet, dass** die weiteren Füllstoffe Metallsulfide, insbesondere MoS₂ oder ZnS, umfassen.

14. Gleitlagerverbundwerkstoff nach einem oder mehreren der vorstehenden Ansprüche, **dadurch gekennzeichnet, dass** das Gleitschichtmaterial einen Überstand über die poröse Trägerschicht bildet, insbesondere einer Dicke von 5 - 30 µm oder einer Dicke von 30 - 80 µm, oder einer Dicke von ≤ 80pm, insbesondere von 80 - 150 µm.

15. Gleitlagerelement hergestellt aus einem Gleitlagerverbundwerkstoff nach einem oder mehreren der vorstehenden Ansprüche, insbesondere in einem Roll-Biege-Umformprozess oder in einem Tiefziehprozess.

## Claims

1. Metal/plastic slide bearing composite material (2) having a metallic support layer (4), in particular of steel, having a porous carrier layer (6), in particular a carrier layer (6) applied by sintering on metallic particles (7), and having a polymer-based slide layer material (8) which fills the pores of the carrier layer (6) and comprises fillers that improve the tribological properties, the polymer basis being PTFE, **characterized in that** the slide layer material (8) comprises 0.1 to 5 mass % of multi-walled carbon nanotubes with a tube outer diameter of ≤ 80nm and a tube length of ≤ 20µm.

2. Slide bearing composite material according to claim 1, **characterized in that** the tube outer diameter of the carbon nanotubes is ≤ 70 nm, in particular ≤ 60 nm, in particular ≤ 50 nm.

3. Slide bearing composite material according to claim 1 or 2, **characterized in that** the tube length of the carbon nanotubes ist 15 µm, in particular ≤ 10 µm, in particular ≤ 5 µm, in particular ≤ 3 µm, in particular ≤ 2 µm.

4. Slide bearing composite material according to one or more of the preceding claims, **characterized in that** the slide layer material (8) comprises 0.1 to 4 mass %, in particular 0.5 to 4 mass %, in particular 1 - 4 mass %, in particular 1 - 3.5 mass % of carbon nanotubes.

5. Slide bearing composite material according to any one or more of the preceding claims, **characterized in that** the multi-walled carbon nanotubes comprise 2 to 20 walls.

6. Slide bearing composite material according to any one or more of the preceding claims, **characterized in that** the carbon nanotubes are wound in the arm chair (n=m) winding direction, in a zigzag orientation (n, m=0) or chiral (n, m arbitrary).

7. Slide bearing composite material according to one or more of the preceding claims, **characterized in that** the walls of the multi-walled carbon nanotubes have the same winding direction described by n and m.

8. Slide bearing composite material according to any one or more of the preceding claims, **characterized in that** the carbon nanotubes are oriented in the direction of the sliding strain.

9. Slide bearing composite material according to any one or more of the preceding claims, **characterized in that** the slide layer material (8) comprises 1 - 40 mass %, in particular 1 - 30 mass %, in particular 1 - 25 mass %, in particular 5 - 25 mass %, in particular 10 - 25 mass % of further fillers.

10. Slide bearing composite material according to claim 9, **characterized in that** the further fillers are reinforcing substances such as in particular C-fibers, glass fibers, polyamide fibers (aramid); and/or solid lubricants such as, in particular ZnS, BaSO₄, graphite, carbon black, hexagonal boron nitride; and/or metal sulphides such as MoS₂, SnS₂, WS₂, and/or plastic particles such as, in particular aramid (PPTA)-, PPSO₂-, PI- and PAI-particles, polyacrylate particles (PAR), PBA, PBI; and/or metal oxides such as, in particular Fe₂O₃, Al₂O₃, SiO₂, TiO₂, CuO, MgO, ZnO; and/or hard materials (ceramic particles) such as, in particular SiC, Si₃N₄, BC, cubic boron nitride; and/or fluorides such as, in particular CaF₂, NaF, AlF₃; and/or sheet silicates such as, in particular kaolin, mica, wollastonite, talcum, silicic acid; and/or metallic fine powders such as, in particular bronze and bismuth; and/or pigments such as, in particular mixed phase oxide pigments, namely Co-Al, Cr-Sb-Ti, Co-Ti, Fe-Al or Co-Cr.

11. Slide bearing composite material according to one or more of the preceding claims, **characterized in that** the further fillers comprise reinforcing substances, in particular carbon fibers.

12. Slide bearing composite material according to one or more of the preceding claims, **characterized in that** the further fillers comprise solid lubricants, in particular graphite or hexagonal boron nitride.

13. Slide bearing composite material according to one or more of the preceding claims, **characterized in that** the further fillers comprise metal sulfides, in particular MoS₂ or ZnS.

14. Slide bearing composite material according to one or more of the preceding claims, **characterized in that** the slide layer material forms a projection past the porous carrier layer, in particular of a thickness of 5 - 30 µm or a thickness of 30 - 80 µm or a thickness of ≥ 80 µm, in particular of 80 - 150 µm.

15. Slide bearing element produced from a slide bearing composite material according to any one or more of the preceding claims, in particular, in a rolling bending forming process or in a deep-drawing process.

## Revendications

1. Matériau composite de métal/matière plastique pour palier lisse (2) comprenant une couche d'appui (4) métallique, en particulier en acier, une couche support (6) poreuse, en particulier une couche support (6) frittée à partir de particules métalliques (7) ainsi qu'un matériau de revêtement antifriction (8) à base de polymère comblant les pores de la couche support (6) et ayant des charges améliorant les propriétés tribologiques, la base de polymère étant du PTFE, **caractérisé par le fait que** le matériau de revêtement antifriction (8) comprend de 0,1 à 5 % en masse de nanotubes de carbone à parois multiples ayant un diamètre extérieur de tube de ≤ 80 nm et une longueur de tube de ≤ 20 µm.

2. Matériau composite pour palier lisse selon la revendication 1, **caractérisé par le fait que** le diamètre extérieur de tube des nanotubes de carbone est ≤ 70 nm, en particulier ≤ 60 nm, en particulier ≤ 50 nm.

3. Matériau composite pour palier lisse selon la revendication 1 ou 2, **caractérisé par le fait que** la longueur de tube des nanotubes de carbone est ≤ 15 µm, en particulier ≤ 10 µm, en particulier ≤ 5 µm, en particulier ≤ 3 µm, en particulier ≤ 2 µm.

4. Matériau composite pour palier lisse selon l'une ou plusieurs des revendications précédentes, **caractérisé par le fait que** le matériau de revêtement antifriction (8) comprend de 0,1 à 4 % en masse, en particulier de 0,5 à 4 % en masse, en particulier de 1 à 4 % en masse, en particulier de 1 à 3,5 % en masse de nanotubes de carbone.

5. Matériau composite pour palier lisse selon l'une ou plusieurs des revendications précédentes, **caractérisé par le fait que** les nanotubes de carbone à parois multiples présentent entre 2 et 20 parois.

6. Matériau composite pour palier lisse selon l'une ou plusieurs des revendications précédentes, **caractérisé par le fait que** les nanotubes de carbone sont enroulés dans le sens d'enroulement arm chair (n=m), en orientation zigzag (n, m=0) ou de manière chirale (n,m au choix).

7. Matériau composite pour palier lisse selon l'une ou plusieurs des revendications précédentes, **caractérisé par le fait que** les parois des nanotubes de carbone à parois multiples présentent le même sens d'enroulement décrit par n et m.

8. Matériau composite pour palier lisse selon l'une ou plusieurs des revendications précédentes, **caractérisé par le fait que** les nanotubes de carbone sont orientés dans la direction de la sollicitation de glissement.

9. Matériau composite pour palier lisse selon l'une ou plusieurs des revendications précédentes, **caractérisé par le fait que** le matériau de revêtement antifriction (8) comprend de 1 à 40 % en masse, en particulier de 1 à 30 % en masse, en particulier de 1 à 25 % en masse, en particulier de 5 à 25 % en masse, en particulier de 10 à 25 % en masse d'autres charges.

10. Matériau composite pour palier lisse selon la revendication 9, **caractérisé par le fait que** les autres charges comprennent des matières de renforcement, telles que, en particulier, les fibres de C, les fibres de verre, les fibres de polyamide (aramide); et/ou des lubrifiants solides, tels que, en particulier, ZnS, BaSO₄, le graphite, le noir de carbone, le nitrure de bore hexagonal; et/ou des sulfures métalliques, tels que MoS₂, SnS₂, WS₂; et/ou des particules de matière plastique, telles que, en particulier, les particules d'aramide (PPTA), de PPSO₂, de PI et de PAI, les particules de polyacrylate (PAR), PBA, PBI; et/ou des oxydes métalliques, tels que, en particulier, Fe₂O₃, Al₂O₃, SiO₂, TiO₂, CuO, MgO, ZnO; et/ou des substances dures (particules de céramique), telles que, en particulier, SiC, Si₃N₄, BC, le nitrure de bore cubique; et/ou des fluorures, tels que, en particulier, CaF₂, NaF, AlF₃; et/ou des silicates stratifiés, tels que, en particulier, le kaolin, le mica, la wollastonite, le talc, l'acide silicique; et/ou des poudres fines métalliques, telles que, en particulier, le bronze et le bismuth; et/ou des pigments, tels que, en particulier, les pigments d'oxyde à phase mixte, à savoir Co-Al, Cr-Sb-Ti, Co-Ti, Fe-Al ou Co-Cr.

11. Matériau composite pour palier lisse selon l'une ou plusieurs des revendications précédentes, **caractérisé par le fait que** les autres charges comprennent des matières de renforcement, en particulier des fibres de carbone.

12. Matériau composite pour palier lisse selon l'une ou plusieurs des revendications précédentes, **caractérisé par le fait que** les autres charges comprennent des lubrifiants solides, en particulier le graphite ou le nitrure de bore hexagonal.

13. Matériau composite pour palier lisse selon l'une ou plusieurs des revendications précédentes, **caractérisé par le fait que** les autres charges comprennent des sulfures métalliques, en particulier MoS₂ ou ZnS.

14. Matériau composite pour palier lisse selon l'une ou plusieurs des revendications précédentes, **caractérisé par le fait que** le matériau de revêtement antifriction forme une saillie sur la couche support poreuse, en particulier d'une épaisseur comprise entre 5 et 30 µm ou d'une épaisseur comprise entre 30 et 80 µm ou d'une épaisseur de ≤ 80 µm, en particulier comprise entre 80 et 150 µm.

15. Elément de palier lisse fabriqué à partir d'un matériau composite pour palier lisse selon l'une ou plusieurs des revendications précédentes, en particulier dans un processus de formage par roulage ou dans un processus d'emboutissage.
